(19) **Europäisches Patentamt / European Patent Office / Office européen des brevets**

(11) **EP 1 480 370 B1**

(12) **EUROPEAN PATENT SPECIFICATION**

(45) Date of publication and mention
of the grant of the patent:
**18.06.2008 Bulletin 2008/25**

(51) Int Cl.:
**H04L 7/08** (2006.01)   *H04J 3/06* (2006.01)

(21) Application number: **03737452.7**

(22) Date of filing: **31.01.2003**

(86) International application number:
**PCT/JP2003/000983**

(87) International publication number:
**WO 2003/067806 (14.08.2003 Gazette 2003/33)**

(54) **TRANSMISSION DATA FRAME SYNCHRONIZATION METHOD AND TRANSMISSION DATA FRAME SYNCHRONIZATION CIRCUIT**

ÜBERTRAGUNGSDATENRAHMENSYNCHRONISATIONSVERFAHREN UND
ÜBERTRAGUNGSDATENRAHMENSYNCHRONISATIONSSCHALTUNG

PROCEDE ET CIRCUIT DE SYNCHRONISATION DE TRAME DE DONNEES DE TRANSMISSION

(84) Designated Contracting States:
**DE FI FR GB IT**

(30) Priority: **05.02.2002 JP 2002027874**

(43) Date of publication of application:
**24.11.2004 Bulletin 2004/48**

(73) Proprietor: **NEC CORPORATION**
**Minato-ku,**
**Tokyo 108-8001 (JP)**

(72) Inventor: **TSUZUKI, Kenji**
**Minato-ku, Tokyo 108-8001 (JP)**

(74) Representative: **Glawe, Delfs, Moll**
**Patentanwälte**
**Postfach 26 01 62**
**80058 München (DE)**

(56) References cited:
JP-A- 5 068 030       JP-A- 7 250 056
JP-A- 2000 165 369    JP-A- 2001 339 360
US-A- 4 965 814

• **PATENT ABSTRACTS OF JAPAN vol. 1997, no. 11, 28 November 1997 (1997-11-28) -& JP 09 181715 A (NEC CORP), 11 July 1997 (1997-07-11)**

**Description**

<u>Technical Field:</u>

The present invention relates to a method and circuit for establishing frame synchronization of transmission data in a digital transmission system.

<u>Background Art:</u>

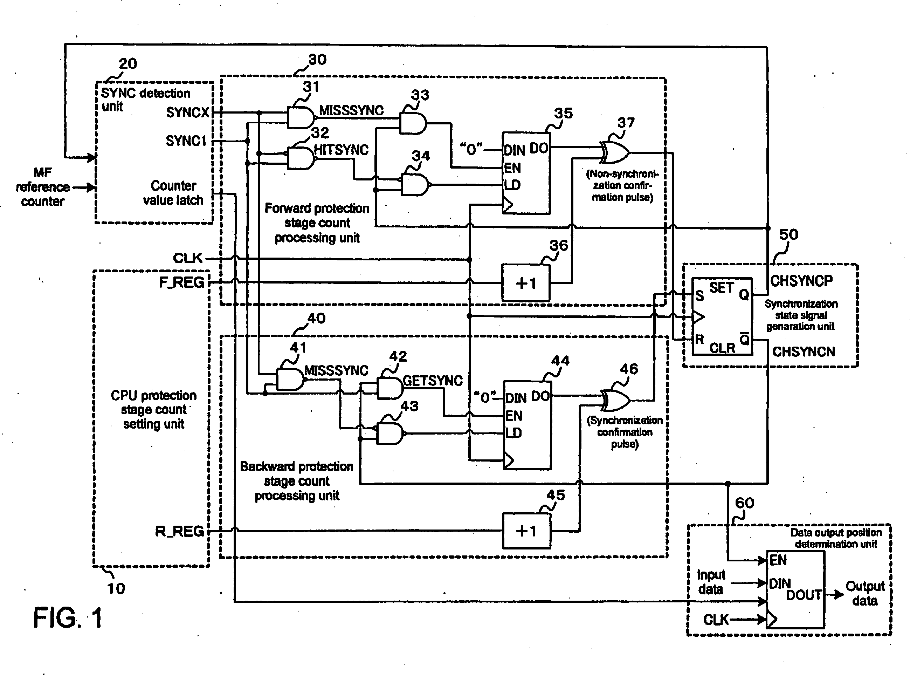

Conventionally, a transmission data frame synchronization circuit has been known in a digital transmission system for establishing the synchronization of transmission data. Fig. 1 is a block diagram illustrating the configuration of a conventional transmission data frame synchronization circuit.

The transmission data frame synchronization circuit comprises CPU protection stage count setting unit 10, SYNC detection unit 20, forward protection stage count processing unit 30, backward protection stage count processing unit 40, synchronization state signal generation unit 50, and data output position determination unit 60.

CPU protection stage count setting unit 10 determines forward protection stage count setting value F_REG and backward protection stage count setting value R_REG. Forward protection stage count setting value F_REG is a value resulting from a subtraction of one from the number of forward protection stages. For example, if the number of forward protection stages is three, forward protection stage count setting value F_REG is two. Similarly, backward protection stage count setting value R_REG is a value resulting from a subtraction of one from the number of backward protection stages.

SYNC detection unit 20 detects synchronous bits SYNC in transmission data. Synchronous bit SYNC takes "L" level only at one bit of each frame. SYNC detection unit 20 detects synchronous bit SYNC to generate synchronous bit signal SYNC1 indicative of the position of the synchronous bit in a current frame, and another synchronous bit signal SYNCX indicative of the position of the synchronization bit at a time at which frame synchronization is confirmed. Each of synchronous bit signals SYNCX, SYNC1 is a signal which goes to "H" level at the position of the synchronous bit.

An MF reference counting value is a value which is triggered by the first frame start signal at the start of the system, and counts at rising edges of internal operation clock signal CLK in one frame. SYNC detection unit 20 holds the MF reference counting value at a position coincident with synchronous bit SYNC in synchronization with clock signal CLK, and delivers the held value to data output position decision unit 60 as a SYNC confirmed position counting value.

It should be noted that SYNC detection unit 20 continues to hold the SYNC confirmation position counting value which has been held in the first frame in which the frame synchronization is established, i.e., a frame in which frame synchronization state signal CHSYNCP, later described, transitions from "L" to "H" until frame non-synchronization is found.

Next, description will be made on forward protection stage count processing unit 30. Forward protection stage count processing unit 30 generates a non-synchronization confirmation pulse when synchronous bits SYNC cannot be detected by the number of forward protection stages during a frame synchronization period. In forward protection stage count processing unit 30, negative logical product circuit (hereinafter called "NAND") 31 takes a negative logical product of synchronous bits SYNCX, SYNC1 to generate signal MISSSYNC which is effective at "H" when the position of the synchronous bit in a current frame does not match with the position of the synchronous bit at the time of the confirmation of synchronization. NAND 32 takes a negative logical product of a logically inverted version of synchronous bit signal SYNCX and synchronous bit signal SYNC1 to generate signal HITSYNC which is effective at "H" when the position of the synchronous bit in the current frame matches with the position of the synchronous bit at the time of the confirmation of synchronization.

Logical product circuit (hereinafter called "AND") 33 takes a logical product of signal MISSSYNC and frame synchronization state signal CHSYNCP. AND 33 generates a signal which is at "H" when, in a frame synchronization state, the position of the synchronous bit in the current frame does not match with the position of the synchronous bit at the time of the confirmation of synchronization, as enable signal EN for shifting up counter 35. NAND 34 takes a negative logical product of a logically inverted version of signal HITSYNC and frame synchronization state signal CHSYNCP, and generates a signal which is at "H" when, in a non-synchronization state, the position of the synchronous bit in the current frame matches with the position of the synchronous bit at the time of the confirmation of synchronization, as load signal LD for setting an initial value of counter 35.

Counter 35 fetches the initial value "0" applied to input terminal DIN when load signal LD is at "H." Also, counter 35 counts up the counting value one by one in synchronization with clock signal CLK when enable signal EN is at "H," and delivers the counting value from output terminal DO.

Adder 36 adds one to forward protection stage count setting value F_REG and delivers the resulting value. Exclusive logical sum circuit (hereinafter called "ExOR") 37 takes an exclusive logical sum of the output value of counter 35 and the output value of adder 36 to generate a non-synchronization confirmation pulse which is at "L" when the two output values match with each other. For example, when forward protection stage count setting value F_REG is two, i.e., when the number of forward protection stages is three, if the position of the synchronous bit in the current frame does not match with the position of the synchronous bit at the time of the confirmation of synchronization during a frame synchronization period, enable signal EN delivered from AND 33 causes counter 35 to count up its counting value by one for each frame in such a manner as $0 \rightarrow 1 \rightarrow 2 \rightarrow 3$. Since the output value of counter 35 matches with the output value of adder 36 in the third frame, the non-synchronization confirmation pulse is delivered from ExOR 37 at that timing. Upon delivery of the non-synchronization confirmation pulse at "L" level, synchronization state signal generation unit 50, which comprises an RS flip-flop, enters a reset state to bring frame synchronization state signal CHSYNCP indicative of whether or not a frame synchronization state exists to "L" level, and to bring frame synchronization state signal CHSYNCN to "H" level.

Frame synchronization state signal CHSYNCP is active when it is at "H" level, i.e., indicating a frame synchronization state. Frame synchronization state signal CHSYNCN, which is a logically inverted version of CHSYNCP, indicates a frame synchronization state when it is at "L" level.

A transition of frame synchronization state signal CHSYNCP to "L" level causes load signal LD delivered from NAND 34 to transition to "H," thus clearing the counting value of counting value in such a manner as $3 \rightarrow 0$.

Next, description will be made on backward protection stage count processing unit 40. Backward protection stage count processing unit 40 generates a synchronization confirmation pulse when it detects synchronous bits SYNC as many as the number of frames equal to the number of backward protection stages during a frame non-synchronization period. In backward protection stage count processing unit 40, NAND 41 generates signal MISSSYNC which is at "H" when the position of the synchronous bit in the current frame does not match with the position of the synchronous bit at the time of the confirmation of synchronization in a manner similar to NAND 31 in forward protection stage count processing unit 30. AND 42 takes a logical product of synchronous bit signal SYNC1 and frame synchronization state signal CHSYNCN to generate a signal which is at "H" when synchronous bit SYNC can be detected in a frame non-synchronization state, as enable signal EN for counter 44. NAND 43 takes a negative logical product of a logically inverted version of signal MISSSYNC and frame synchronization state signal CHSYNCN to generate a signal which is at "H" when, in a non-synchronization state, the position of the synchronous bit in the current frame does not match with the position of the synchronous bit at the time of the confirmation of synchronization, as load signal LD for counter 44.

Counter 44 fetches an initial value "0" when load signal LD is at "H," and counts up the counting value in synchronization with clock signal CLK when enable signal EN is at "H" in a manner similar to counter 35 in forward protection stage count processing unit 30. Adder 45 adds one to backward protection stage count setting value R_REG and delivers the resulting value. ExOR 46 takes an exclusive logical sum of the output value of counter 44 and the output value of adder 45 to generate a synchronization confirmation pulse which is at "L" level when the two output values match with each other.

For example, as synchronous bit SYNC is detected during a frame non-synchronization period when backward protection stage count setting value R_REG is zero, i.e., when the number of backward protection stages is one, enable signal EN delivered from AND 42 causes counter 44 to count up its counting value In such a manner as $0 \rightarrow 1$. Consequently, since the output value of counter 44 matches with the output value of adder 45, a synchronization confirmation pulse is delivered from ExOR 46.

As the synchronization confirmation pulse at "L" level is delivered, synchronization state signal generation unit 50 enters a set state, and brings frame synchronization state signal CHSYNCP to "H" level and frame synchronization state signal CHSYNCN to "L" level. Since the transition of frame synchronization state signal CHSYNCN to "L" level causes NAND 43 to deliver load signal LD at "H," the counting value of counter 44 is cleared in such a manner as $1 \rightarrow 0$.

Next, description will be made on data output position decision unit 60. Data output position decision unit 60 utilizes a SYNC confirmation position counting value delivered from SYNC detection unit 20 to select a position at which transmission data is delivered to control the delivery of transmission data during a frame synchronization period. Specifically, data output position decision unit 60 starts delivering data in synchronization with clock signal CLK from data at a start position of input data, which is located at the position of synchronous bit SYNC indicated by the SYNC confirmation position counting value, when a shift is made to a frame synchronization state, as indicated by frame synchronization state signal CHSYNCN which transitions to "L."

As described above, conventionally, the idea of protection stage count processing is used for confirming the frame synchronization of transmission data. By using backward protection stage count processing unit 40 from a frame non-synchronous state to the confirmation of frame synchronization, and using forward protection stage count processing unit 30 from the frame synchronization state to the confirmation of frame non-synchronization, the operation implemented thereby conforms to forward protection stage count setting value F_REG and backward protection stage count setting value R_REG which have been set by CPU protection stage count setting unit 10. For transmission data, the start position is determined by data output position decision unit 60 only at the time of the confirmation of frame synchronization, and transmission data is sequentially delivered from data at the start position, thereby processing data after the confirmation of synchronization.

In the conventional transmission data frame synchronization circuit, delivery of transmission data is stopped by data output position decision unit 60 at the time frame non-synchronization is confirmed. By setting forward protection stage count setting value F_REG to its minimum value of zero, i.e., the number of forward protection stages to one, and backward protection stage count setting value R_REG to its minimum value of zero, i.e., the number of backward protection stages to one by CPU protection stage count setting unit 10, the delivery of transmission data need be stopped only by one frame at minimum during a frame non-synchronization period if the transmission data is being normally transmitted. Stated another way, the delivery is stopped for a one-frame interval. However, if the number of backward protection stages is set to two or more by CPU protection stage count setting unit 10, the delivery is stopped over two frames or more.

In the conventional transmission data frame synchronization circuit, even when the position of a synchronous bit in a current frame matches the position of a synchronous bit in the preceding frame after a shift has been made during a frame synchronization period to a pseudo-synchronization state wherein the position of the synchronous bit in the current frame does not match with the position of the synchronous bit at the time of the confirmation of synchronization, frame non-synchronization occurs without establishing the frame synchronization. The reason for this is that if the position of the synchronous bit in the current frame does not match with the position of the synchronous bit at the time of the confirmation of synchronization, counter 35 in forward protection stage count processing unit 30 counts up its counting value by one for each frame. Thus, in the conventional transmission data frame synchronization circuit, there is a problem that when a pseudo-synchronization state occurs during a frame synchronization period, a shift is made to frame non-synchronization even if the synchronization can be established afterward, so that the delivery of data is stopped.

Also, in the conventional transmission data frame synchronization circuit, when forward protection stage count setting value F_REG is set to one or more, i.e., the number of forward protection stages to two or more by CPU protection stage count setting unit 10, if data becomes instable during a frame synchronization period due to an instantaneous interruption, a format error, or the like, the position of the synchronous bit does not match with the position of the synchronous bit at the time of the confirmation of synchronization, thereby causing counter 35 to count up its counting value in such a manner as $0 \rightarrow 1 \rightarrow 2 \rightarrow ...$, as mentioned above. In this event, while the start position of transmission data delivered from data output position decision unit 60 must be changed as well in response to a change in the position of the synchronous bit, the conventional transmission data frame synchronization circuit continues to deliver transmission data, assuming a frame synchronization state, until the output value of counter 35 matches with the output value of adder 36, possibly transferring erroneous data for several frame intervals until frame non-synchronization is confirmed from a pseudo-synchronization state in which data is instable.

Document JP-A-09 -181 715, applicant NEC, discloses frame synchronisation detection with two synch protection stages, each protecting at a different position of the frame sync pattern. One protection stage resets the other protection stage.

Disclosure of the Invention:

It is an object of the present invention to provide a transmission data frame synchronization method which is capable of maintaining a frame synchronization state to avoid stopping data delivery when a state in which the synchronization can be established occurs after an occurrence of a pseudo-synchronization state, and preventing the occurrence of transmission data errors in the pseudo-synchronization state.

It is another object of the present invention to provide a transmission data frame synchronization circuit which is capable of maintaining a frame synchronization state to avoid stopping data delivery when a state in which the synchronization can be established occurs after an occurrence of a pseudo-synchronization state, and preventing the occurrence of transmission data errors in the pseudo-synchronization state.

The first object of the present invention is achieved by a transmission data frame synchronization method which has the steps of holding the position of synchronization information indicative of a breakpoint of a frame on a frame-by-frame basis, counting the number of frames in which the synchronization information is detected during a frame non-synchronization period as a first counting value, and establishing frame synchronization when the first counting value reaches a previously set first number of backward protection stages, counting the number of frames in which the synchronization information is detected after a pseudo-synchronization state has occurred during a frame synchronization period, wherein the position of the synchronization information does not match with the position of the synchronization information in the preceding frame, as a second counting value, and establishing frame synchronization when the second counting value reaches a previously set second number of backward protection stages, counting the number of frames in which the position of the synchronization information does not match with the position of the synchronization information in the preceding frame during a frame synchronization period as a third counting value, and establishing frame non-synchronization when the third counting value reaches a previously set number of forward protection stages, and clearing the third counting value when the position of the synchronization information matches with the position of the synchronization information in the preceding frame after the pseudo-synchronization state has occurred during a frame synchronization period.

The second object of the present invention is achieved by a transmission data frame synchronization circuit which has a detection unit for holding the position of synchronization information indicative of a breakpoint of a frame by a frame-by-frame basis, a backward protection stage count processing unit for counting the number of frames in which the synchronization information is detected during a frame non-synchronization period as a first counting value, delivering a synchronization confirmation pulse when the first counting value reaches a previously set first number of backward protection stages, counting the number of frames in which the synchronization information is detected after a pseudo-synchronization state has occurred during a frame synchronization period, wherein the position of the synchronization information does not match with the position of the synchronization information in the preceding frame, as a second counting value, and delivering a frame synchronization confirmation pulse when the second counting value reaches a previously set second number of backward protection stages, and a forward protection stage count processing unit for counting the number of frames in which the position of the synchronization information does not match with the position of the synchronization information in the preceding frame during a frame synchronization period as a third counting value, and delivering a frame non-synchronization pulse when the third counting value reaches a previously set number of forward protection stages, and clearing the third counting value when the position of the synchronization information matches with the position of the synchronization information in the preceding frame after the pseudo-synchronization state has occurred during a frame synchronization period.

Specifically, the transmission frame synchronization method of the present invention can maintain the frame synchronization and accurately process transmission data by additionally using the backward protection stage count processing used for purposes of making a transition from a transmission frame non-synchronization state to a frame synchronization state in the forward protection stage count processing used for purposes of maintaining transmission frame synchronization.

The transmission data frame synchronization circuit of the present invention uses the backward protection stage count processing unit which has been conventionally operated only during a frame non-synchronization period for confirming frame synchronization, and the forward protection stage count processing unit which has been conventionally operated only during a frame synchronization period for confirming non-synchronization, adds improvements to the operation of these processing units such that the backward protection stage count processing unit is independently activated, when the synchronization is detected while the forward protection stage count processing unit is operating during a frame synchronization period, to switch transmission data to be delivered while the frame synchronization is continued. Also, the transmission data frame synchronization circuit of the present invention can more accurately control transmission data during the frame synchronization period, and accomplish stable processing by employing the conventional idea of the number of protection stages which makes a determination by the number of times synchronization information is detected in succession depending on the state of input transmission data. Even from a viewpoint of circuit scale, the transmission data frame synchronization circuit of the present invention can be readily implemented since it can be configured by incorporating a small number of circuits into the conventional transmission data frame synchronization circuit.

Brief Description of the Drawings:

Fig. 1 is a block diagram illustrating the configuration of a conventional transmission data frame synchronization circuit;

Fig. 2 is a block diagram illustrating the configuration of a transmission data frame synchronization circuit in a preferred embodiment of the present invention;

Fig. 3 is a block diagram illustrating in detail the configuration of a the transmission data frame synchronization circuit illustrated in Fig. 2;

Fig. 4 is a timing chart representing the operation of the circuit illustrated in Fig. 3 in comparison with the operation of the circuit illustrated in Fig. 1; and

Fig. 5 is a timing chart representing the operation of the circuit illustrated in Fig. 3 in comparison with the operation of the circuit illustrated in Fig. 1.

Best Mode for Carrying out the Invention:

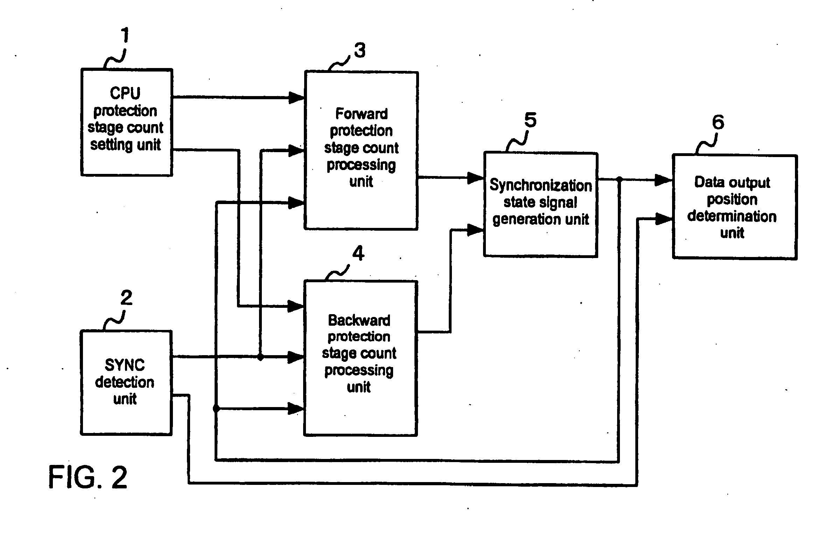

A transmission data frame synchronization circuit according to a preferred embodiment of the present invention illustrated in Fig. 2 comprises CPU protection stage count setting unit 1, SYNC detection unit 2, forward protection stage count processing unit 3, backward protection stage count processing unit 4, synchronization state signal generation unit 5, and data output position determination unit 6. CPU protection stage count setting unit 1 sets a value for the number of forward protection stages and a value for the number of backward protection stages. SYNC detection unit 2 detects synchronous bit signal SYNC. Signals generated in CPU protection stage count setting unit 1 and SYNC detection unit 2 are supplied to forward protection stage count processing unit 3 and to backward protection stage count processing unit 4. Forward protection stage count processing unit 3 and backward protection stage count processing unit 4 generate a non-synchronization confirmation pulse and a synchronization confirmation pulse, respectively. These confirmation pulses are supplied to synchronization state signal generation unit 5. Synchronization state signal generation unit 5 generates a frame synchronization state signal. Data output position determination unit 6 is supplied with the frame synchronization state signal generated in synchronization state signal generation unit 5 and a SYNC confirmation position counting value generated in SYNC detection unit 2, and delivers transmission data after confirmation of frame synchronization.

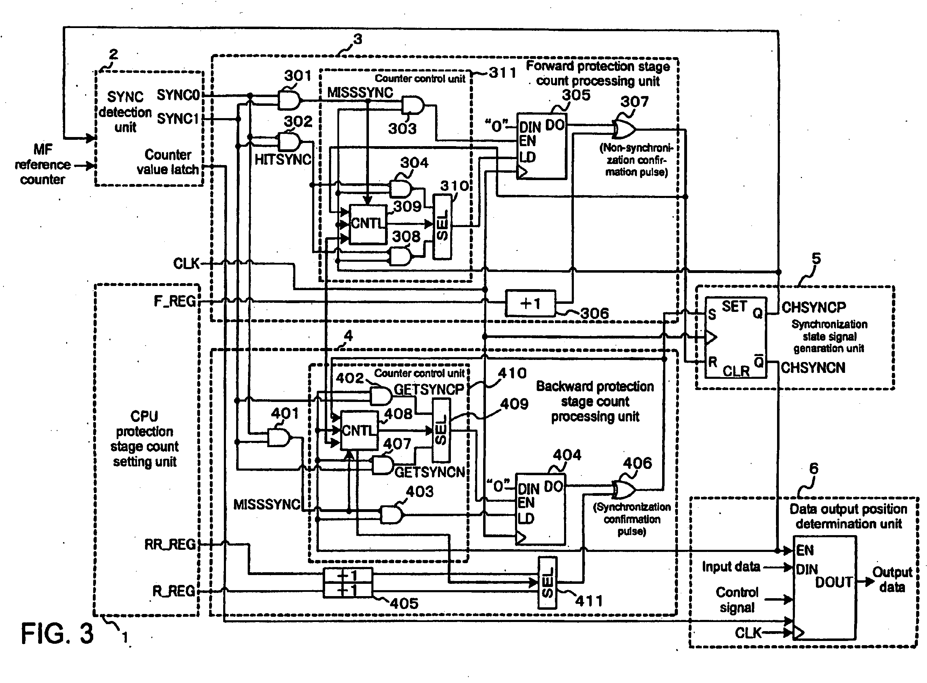

Next, the configuration of the transmission data frame synchronization circuit will be described in detail with reference to Fig. 3.

CPU protection stage count setting unit 1 determines forward protection stage count setting value F_REG, first backward protection stage count setting value R_REG for use during a frame non-synchronization period, and second backward protection stage count setting value RR_REG for use during a frame pseudo-synchronization period. Forward protection stage count setting value F_REG is a value produced by subtracting one from the number of forward protection stages. Similarly, first backward protection stage count setting value R_REG is a value produced by subtracting one from the number of backward protection stages during a frame non-synchronization period, while second backward protection stage count setting value RR_REG is a value produced by subtracting one from the number of backward protection stages during a pseudo-synchronization period.

SYNC detection unit 2 detects 1-bit synchronous bit SYNC at "L" level in each frame to deliver synchronous bit signal SYNC1 indicative of the position of the synchronous bit in a current frame, and synchronous bit signal SYNC0 indicative of the position of the synchronous bit in the preceding frame. Synchronous bit signals SYNC0, SYNC1 are signals which go to a "H" level at the position of the synchronous bit. An MF reference counting value supplied to SYNC detection unit 2 is a value which is triggered by the first frame start signal at the start of the system, and counts at rising edges of internal operation clock signal CLK in one frame. SYNC detection unit 2 holds the MF reference counting value at a position coincident with synchronous bit SYNC in synchronization with clock signal CLK, and delivers the held value to data output position determination unit 6 as a SYNC confirmation position counting value. The SYNC confirmation position counting value indicates at which position synchronous bit SYNC exists in the MF reference counting value, i.e., at which position synchronous bit SYNC exists in one frame.

It should be noted that SYNC detection unit 20 in the conventional data frame synchronization circuit illustrated in Fig. 1 continues to hold the SYNC confirmation position counting value held in the first frame in which the frame synchronization is established until a shift is made to frame non-synchronization, whereas SYNC detection unit 2 in the transmission data frame synchronization circuit in this embodiment re-holds a SYNC confirmation position counting value on a frame-by-frame basis. It should be noted that the first frame in which the frame synchronization is established refers to a frame in which frame synchronization state signal CHSYNCP, later described, transitions from "L" to "H."

Next, description will be made on forward protection stage count processing unit 3. Forward protection stage count processing unit 3 counts the number of frames in which the position of synchronous bit SYNC does not match with the position of synchronous bit SYNC in the preceding frame during a frame synchronization period, and delivers a non-synchronization confirmation pulse when the counting value reaches the number of forward protection stages (F_REG+1). Further, forward protection stage count processing unit 3 clears the counting value when the position of synchronous bit SYNC matches with the position of synchronous bit SYNC in the preceding frame after a pseudo-synchronization state has occurred during the frame synchronization period.

In forward protection stage count processing unit 3, NAND 301 takes a negative logical product of synchronous bit signals SYNC0 and SYNC1 to deliver signal MISSSYNC which is at "H" when the position of the synchronous bit in a current frame does not match with the position of the synchronous bit in the preceding frame. NAND 302 takes a negative logical product of a logically inverted version of synchronous bit signal SYNC0 and synchronous bit signal SYNC1 to deliver signal HITSYNC which is at "H" when the position of the synchronous bit in the current frame matches with the position of the synchronous bit in the preceding frame.

AND 303 in counter control unit 311 takes a logical product of signal MISSSYNC and frame synchronization state signal CHSYNCP to deliver a signal which is at "H" when, in a frame synchronization state, the position of the synchronous bit in the current frame does not match with the position of the synchronous bit in the preceding frame, as enable signal EN for counter 305. NAND 304 takes a negative logical product of a logically inverted version of signal HITSYNC and frame synchronization state signal CHYNCP to deliver a signal at "H" to selection unit (SEL) 310 when, in a non-synchronization state, the position of the synchronous bit in the current frame matches with the position of the synchronous bit in the preceding frame. NAND 308 takes a negative logical product of a logically inverted version of signal HITSYNC and a logically inverted version of frame synchronous signal CHSYNCP to deliver a signal at "H" to selection unit 310 when, in a synchronization state, the position of the synchronous bit in the current frame matches with the position of the synchronous bit in the preceding frame.

Control unit (CNTL) 309 in counter control unit 311 is supplied with signal MISSSYNC delivered from NAND 301; the non-synchronization confirmation pulse delivered from ExOR 307; frame synchronous stage signal CHSYNCP delivered from synchronization state signal generation unit 5; and control information on control unit 408 in backward protection stage count processing unit 4. Here, frame synchronization state signal CHSYNCP is at "H" level during a frame synchronization period, while the non-synchronization confirmation pulse and frame synchronization state signal CHSYNCP are at "L" level during a frame non-synchronization period. Also, a frame pseudo-synchronization state refers to a state in which the position of the synchronous bit in the current frame does not match with the position of the synchronous bit in the preceding frame during a frame synchronization period, so that frame synchronization state signal CHSYNCP is at "H" level and signal MISSSYNC is at "H" level during a frame pseudo-synchronization period. Control unit 309 forces selection unit 310 to select the output of NAND 304 during a frame non-synchronization period or during a pseudo-synchronization period, and forces selection unit 310 to select the output of NAND 308 during a frame synchronization period. The signal selected and delivered by selection unit 310 is applied to counter 305 as load signal LD.

Counter 305 fetches an initial value "0" applied to input terminal DIN when load signal LD is at "H." Also, counter 305 counts up its counting value by one in synchronization with clock signal CLK when enable signal EN is at "H" and delivers this counting value from output terminal DO. Adder 306 adds one to forward protection stage count setting unit F_REG, and delivers the resulting value. ExOR 307 takes an exclusive logical sum of the output value of counter 305 and the output value of adder 306 to deliver a non-synchronization confirmation pulse which is at "L" level when the two output values match with each other.

Next, description will be made on backward protection stage count processing unit 4. Backward protection stage count processing unit 4 counts the number of frames in which synchronous bit SYNC is detected during a frame non-synchronization period, and delivers a synchronization confirmation pulse when the counting value reaches a first number of backward protection stages (R_REG+1). Further, backward protection stage count processing unit 4 counts the number of frames in which synchronous bit SYNC is detected after a pseudo-synchronization state has occurred during a frame synchronization period, where the position of synchronous bit SYNC does not match with the position of synchronous bit SYNC in the preceding frame, and delivers a synchronization confirmation pulse when this counting value reaches a second number of backward protection stages (RR_REG+1).

In backward protection stage count processing unit 4, NAND 401 delivers signal MISSSYNC which is at "H" level when the position of the synchronous bit in the current frame does not match with the position of the synchronous bit in the preceding frame, in a manner similar to NAND 301 in forward protection stage count processing unit 3. AND 402 takes a logical product of synchronous bit signal SYNC1 and frame synchronization state signal CHSYNCN to deliver a signal at "H" level to selection unit (SEL) 409 when the synchronous bit SYNC can be detected in a frame non-synchronization state. NAND 403 takes a negative logical product of a logically inverted version of signal MISSSYNC and frame synchronization state signal CHSYNCN to deliver a signal at "H" level as load signal LD for counter 404 when, in a frame non-synchronization state, the position of the synchronous bit in the current frame does not match with the position of the synchronous bit in the preceding frame. AND 407 takes a logical product of synchronous bit signal SYNC1 and a logically inverted version of frame synchronization state signal CHSYNCN to deliver a signal at "H" level to selection unit 409 when synchronous bit SYNC can be detected in a frame synchronization state.

Control unit (CNTL) 408 in backward protection stage count processing unit 4 is supplied with signal MISSSYNC delivered from NAND 401; the synchronization confirmation pulse delivered from ExOR 406; frame synchronization state signal CHSYNCN delivered from synchronization state signal generation unit 5; and control information on control unit 309 in forward protection stage count processing unit 3. As described above, the synchronization confirmation pulse and frame synchronization state signal CHSYNCN are at "L" level during a frame synchronization period, while frame synchronization state signal CHSYNCN is at "H" level during a frame non-synchronization period. During a frame pseudo-synchronization period, frame synchronization state signal CHSYNCN is at "L" level, and signal MISSSYNC is at "H" level.

Control unit 408 forces selection unit 409 to select the output of AND 402 during a frame non-synchronization period or during a pseudo-synchronization period, and forces selection unit 409 to select the output of AND 407 during a frame synchronization period. The signal selected and delivered by selection unit 409 is applied to counter 404 as enable signal EN. Also, control unit 408 forces selection unit 411 to select the value produced by adding one to backward protection stage count setting value R_REG, delivered from adder 405, during a frame synchronization period or during a non-synchronization period, and forces selection unit 411 to select the value produced by adding one to backward protection stage count setting unit RR_REG, delivered from adder 405, during a pseudo-synchronization period.

Counter 404 fetches an initial value "0" when load signal LD is at "H," and counts up its counting value by one in synchronization with clock signal CLK when enable signal EN is at "H" in a manner similar to counter 305 in forward protection stage count processing unit 3. Adder 405 adds one to backward protection stage count setting value R_REG and delivers the resulting value, and also adds one to backward protection stage count setting value RR_REG and delivers the resulting value. ExOR 406 takes a logical exclusive sum of the output value of counter 404 with the output value of selection unit 411 to deliver a synchronization confirmation pulse which is at "L" level when the two output values match with each other.

Next, description will be made on synchronization state signal generation unit 5. Synchronization state signal generation unit 5, which comprises an RS flip-flop, generates frame synchronous signals CHSYNCP, CHSYNCN indicative of whether or not the state is a frame synchronization state, based on the non-synchronization confirmation pulse delivered from forward protection stage count processing unit 3 and the synchronization confirmation pulse delivered from backward protection stage count processing unit 4. As the non-synchronization confirmation pulse at "L" level is delivered from ExOR 307 in forward protection stage count processing unit 3, synchronization state signal generation unit 5 enters a reset state, and brings frame synchronization state signal CHSYNCP to "L" level, and frame synchronization state signal CHSYNCN to "H" level. On the other hand, as the synchronization confirmation pulse at "L" level is delivered from ExOR 406 in backward protection stage count processing unit 4, synchronization state signal generation unit 5 enters a set state, and brings frame synchronization state signal CHSYNCP to "H" level, and frame synchronization state signal CHSYNCN to "L" level.

Next, description will be made on data output position determination unit 6. Data output position determination unit 6 controls delivery of transmission data during a frame synchronization period by selecting the position at which transmission data is to be delivered using the SYNC confirmation position counting value delivered from SYNC detection unit 2. Specifically, data output position determination unit 6 starts delivering data in synchronization with clock signal CLK from data at a start position of input data, which is located at the position of synchronous bit SYNC indicated by the SYNC confirmation position counting value, when a shift is made to a frame synchronization state, as indicated by frame synchronization state signal CHSYNCN which transitions to "L."

In the following, description will be made on the operation of the transmission data frame synchronization circuit of the present embodiment. Since this transmission data frame synchronization circuit includes modifications and additions to the conventional data frame synchronization circuit illustrated in Fig. 1, description will proceed with a comparison in operation between the two circuits.

Input patterns which can be assumed in view of the operation of the transmission data frame synchronization circuit are roughly classified into two: (1) a first pattern which represents that synchronous bit SYNC of transmission data is once erroneously left undetected, but the frame synchronization is again confirmed; and (2) a second pattern which represents that synchronous bit SYNC of transmission data is once erroneously left undetected, but the frame synchronization is not again established. Here, while even a control with the conventional transmission data frame synchronization circuit is effective for the first pattern, the conventional transmission data frame synchronization circuit is incapable of accomplishing an effective control in regard to the second pattern. In contract, the transmission data frame synchronization circuit of the present embodiment is capable of accomplishing an effective control for both the first pattern and the second pattern.

First, description will be made on the circuit operation in the transmission data frame synchronization circuit of the present embodiment which makes frame non-synchronization less likely to occur as countermeasures to stopped data delivery during a frame non-synchronization period. In the transmission data frame synchronous circuit of the present embodiment, control unit 309 is used in forward protection stage count processing unit 3 to flexibly control the loading of counter 305 for counting the number of forward protection stages. By executing a flexible load control, the counting value can be freely cleared, thus making the frame non-synchronization less likely to occur. Also, by clearing the counting value of forward protection stage count processing unit 3 with load signal LD, the transmission data output position can be switched during a transition from a pseudo-synchronization state to a frame synchronization state. In this way, even if the conventional transmission data frame synchronization circuit ends up with a transition to a frame non-synchronization, the transmission data frame synchronization circuit according to the present embodiment can continue a frame synchronization state and can avoid stopping data delivery to transmit data with continuity.

Specifically, the transmission data frame synchronization circuit of the present embodiment is similar to the conventional transmission data frame synchronization circuit in that the counting value of counter 305 is cleared to zero by applying the output of NAND 304 to counter 305 as load signal LD during a frame non-synchronization period. In the conventional transmission data frame synchronization circuit, a shift is made to a frame non-synchronization state if the position of the synchronous bit in the current frame fails to match with the position of the synchronization bit at the time of the confirmation of synchronization a number of times equal to the number of forward protection stages during a frame synchronization state after the counting value of counter 35 (see Fig. 1) has been cleared. On the contrary, in the transmission data frame synchronization circuit of the present embodiment, the counting value of counter 305 is cleared to zero when the position of the synchronous bit in the current frame matches with the position of the synchronous bit in the preceding frame even during a frame pseudo-synchronization period by applying the output of NAND 304 to counter 305 as load signal LD. Also, during a frame synchronization period, the counting value of counter 305 is cleared to zero when the position of the synchronous bit in the current frame matches with the position of the synchronous bit in the preceding frame by applying the output of NAND 308 to counter 305 as load signal LD. By conducting such a load control, the transmission data frame synchronization circuit of the present embodiment can prevent a transition to a frame non-synchronization state, even when the position of the synchronous bit in the current frame deviates from the position of the synchronous bit in the preceding frame during a frame synchronization period to result in pseudo-synchronization, by clearing the counting value of counter 305 to zero when the position of the synchronous bit in the current frame matches the position of the synchronous bit in the preceding frame before the output value of counter 305 matches with the output value of adder 306.

Next, description will be made on the circuit operation which makes transmission data errors less likely to occur in a pseudo-synchronization state when the number of forward protection stages is set to two or more. When the number of forward protection stages is two or more, the conventional transmission data frame synchronization circuit can be used to conduct an effective control for the aforementioned first pattern in which synchronous bit SYNC of transmission data is once erroneously left undetected, but the frame synchronization is again confirmed, whereas the transmission data frame synchronization circuit of the present embodiment alone is effective for the second pattern in which synchronous bit SYNC of transmission data is once erroneously left undetected, but the frame synchronization is not again established. The transmission data frame synchronization circuit of the present embodiment is configured to have the ability to make flexible an enable control for counter 404, which counts the number of backward protection stages, by using control unit 408 in backward protection stage count processing unit 4 and to freely make a count by executing the flexible enable control

The conventional transmission data frame synchronization circuit is prone to transfer erroneous data for several frame intervals from a pseudo-synchronization state, in which data is instable, to the confirmation of frame non-synchronization when data becomes instable during a frame synchronization period due to an instantaneous interruption, format errors and the like to cause the position of synchronous bit SYNC to deviate from the position of the synchronous bit at the time of the confirmation of synchronization, because SYNC detection unit 20 holds the position of synchronous bit SYNC at the time of the confirmation of synchronization. On the other hand, since the transmission data frame synchronization circuit of the present embodiment can switch the position at which transmission data is delivered during a pseudo-synchronization state by using SYNC detection unit 20 which re-holds the position of synchronous bit SYNC on a frame-by-frame basis, errors in transmission data can be limited for a constant frame interval until a transition is made to a non-synchronization state.

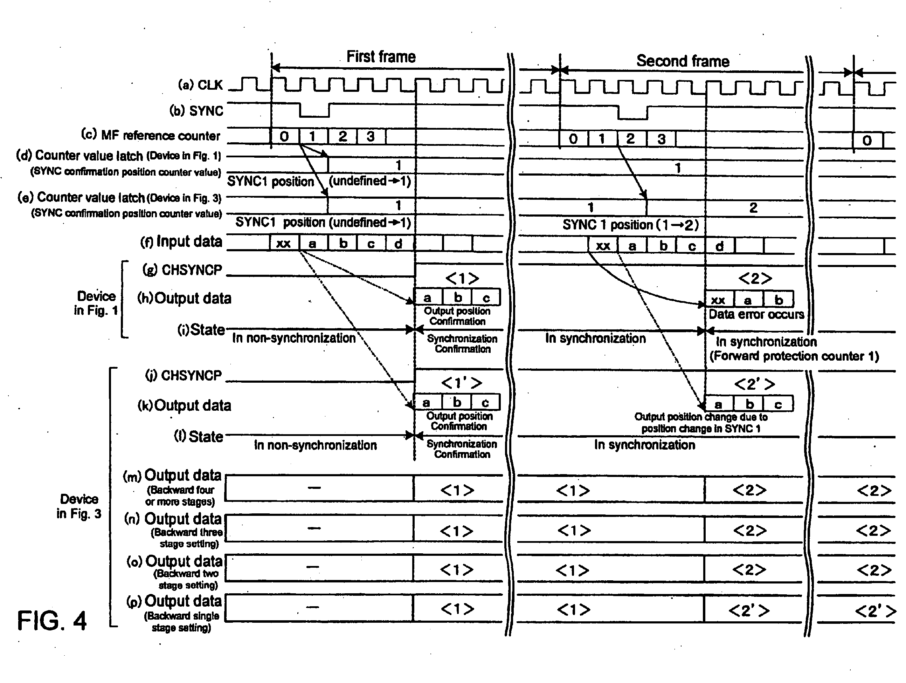

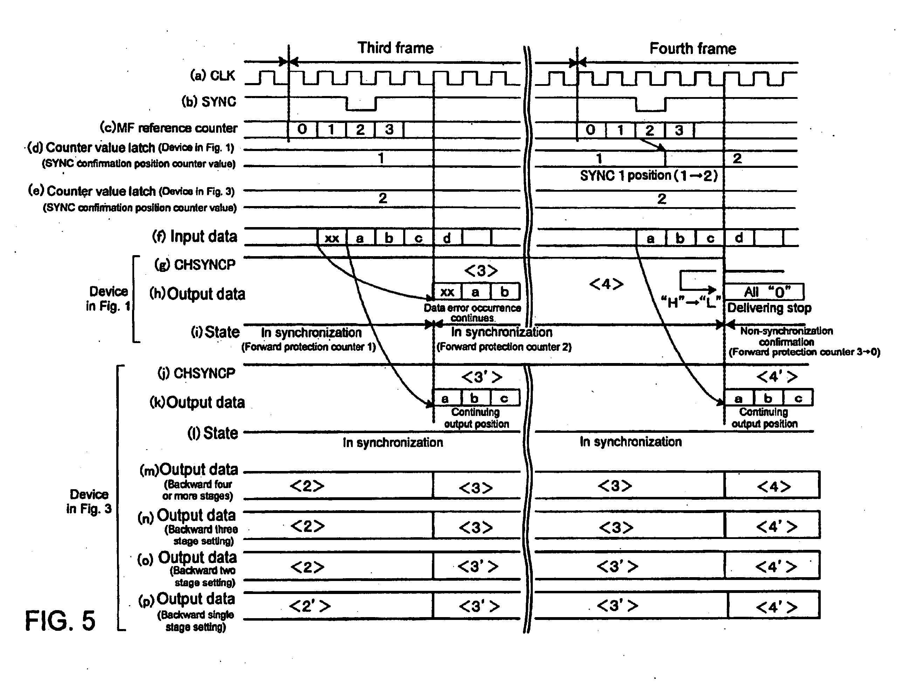

Referring next to Fig. 4 and Fig. 5, description will be made on data output operations of the transmission data frame synchronization circuit of the present embodiment and the conventional transmission data frame synchronization circuit when they are applied, as input data, with the second pattern which represents that synchronous bit SYNC of transmission data is once erroneously left undetected, but the frame synchronization is not again established. Fig. 4 represents the operation for the first and second frames, and Fig. 5 represents the operation for the third and fourth frames, as continued from Fig. 4. In Fig. 4 and Fig.¥ 5, clock signal CLK illustrated in (a); synchronous bit SYNC illustrated in (b); MF reference counter illustrated in (c); and input data illustrated in (f) are applied commonly to the transmission data frame synchronization circuit of the present embodiment and the conventional data frame synchronization circuit. Also, the value of a counting value latch illustrated in (d); frame synchronization state signal CHSYNCP illustrated in (g); output data illustrated in (h); and a state illustrated in (i) represent the operation in the conventional transmission data frame synchronization circuit illustrated in Fig. 1. On the other hand, the value of a counting value latch illustrated in (e); frame synchronization state signal CHSYNCP illustrated in (j); output data illustrated in (k); a state illustrated in (l); and output data illustrated in (m) to (p) represent the operation of the transmission data frame synchronization circuit of the present embodiment illustrated in Fig. 3. It should be noted that the output data illustrated in (m) to (p) correspond to different numbers of backward protection stages, respectively, and are represented as output data formats.

Assume in the following description that backward protection stage count setting values R_REG, RR_REG are respectively set to zero, i.e., the number of backward protection stages to one; and forward protection stage count setting value F_REG to two, i.e., the number of forward protection stages to three.

In the first frame, since the system is started up in the first frame, the conventional transmission data frame synchronization circuit as well as the transmission data frame synchronization circuit of the present embodiment are in a frame non-synchronization state as illustrated in Fig. 4. Then, SYNC detection unit 20 (SYNC detection unit 2) holds an MF reference counting value "1" at a position coincident with synchronous bit SYNC. In this way, as illustrated in (d) and (e) in Fig. 4, the SYNC confirmation position counting value is updated from an indefinite value to "1" in both the transmission data frame synchronization circuits.

In the conventional transmission data frame synchronization circuit, as synchronization bit SYNC is detected during a frame non-synchronization period, counter 44 counts up its counting value in such a manner as $0 \rightarrow 1$ by enable signal EN delivered from AND 33 in forward protection stage count processing unit 30. Since the number of backward protection stages has been set to one, the output value of counter 44 matches with the output value of adder 45, so that a synchronization confirmation pulse is delivered. Similarly, in the transmission data frame synchronization circuit of the present embodiment, as synchronous bit SYNC is detected during a frame non-synchronization period, counter 404 counts up its counting value by enable signal EN delivered from AND 303 in forward protection stage count processing unit 3, the output value of counter 404 matches with the output value of selection unit 411, and a synchronization confirmation pulse is delivered.

In this way, upon delivery of a synchronization confirmation pulse at "L" level, synchronization state signal generation unit 50 (synchronization state signal generation unit 5) brings frame synchronization state signal CHSYNCP to "H" level and frame synchronization state signal CHSYNCN to "L" level. With frame synchronization state signal CHSYNCN brought to "L" level, when load signal LD delivered from NAND 43 (NAND 403) transitions to "H," the counting value of counter 44 (counter 404) is cleared in such a manner as $1 \rightarrow 0$.

When a shift is made to a frame synchronization state, as indicated by frame synchronization state signal CHSYNCN which transitions to "L," data output position determination unit 60 (data output position determination unit 6) starts delivering data from a start position "a" of input data, which is the position of synchronous bit SYNC indicated by SYNC confirmation position counting value "1" as illustrated in (h) and (k) in Fig. 4. In this way, in the first frame, the conventional transmission data frame synchronization circuit also operates in the same manner as the transmission data frame synchronization circuit of the present embodiment.

Next, description will be made on the operation in the second frame. In the second frame, the position of synchronous bit SYNC deviates backward by one clock from the position in the first frame.

In the conventional transmission data frame synchronization circuit, after confirming that the position of the synchronous bit in the current frame does not match with the position of the synchronous bit at the time of the confirmation of synchronization, i.e., in the first frame, the counter 35 counts up its counting value from zero to one ($0 \rightarrow 1$) by enable signal EN, but since the number of forward protection stages has been set to three, the frame synchronization state is maintained. As described above, during a frame synchronization period, SYNC detection unit 20 continues to hold the SYNC confirmation position counting value "1" which was held in the first frame in which the frame synchronization was established until a shift is made to frame non-synchronization. Therefore, although the SYNC confirmation position counting value should be "2" in the second frame, it remains at "1" as illustrated in (d) in Fig. 4 in the conventional transmission data frame synchronization circuit. Data output position determination unit 60 starts delivering data from a start position "xx" of input data which is a position indicated by the SYNC confirmation position counting value "1." In this way, the conventional transmission data frame synchronization circuit delivers erroneous transmission data from the position one clock earlier than the essential position of synchronous bit SYNC in the second frame, as illustrated in (h) of Fig. 4. The delivery of erroneous transmission data is continued until a shift is made to frame non-synchronization.

On the other hand, in the transmission data frame synchronization circuit of the present embodiment, after confirming in the second frame that the position of the synchronous bit in the current frame does not match with the position of the synchronous bit in the preceding frame, counter 305 counts up its counting value from zero to one ($0 \rightarrow 1$) by enable signal EN, but since the number of forward protection stages has been set to three, the frame synchronization state is maintained. Also, since the position of the synchronous bit in the current frame does not match with the position of the synchronous bit in the preceding frame in the second frame, control unit 408 recognizes a pseudo-synchronization state, and forces selection unit 409 to select the output of AND 402. As synchronous bit SYNC is detected in the pseudo-synchronization state, enable signal EN is applied to counter 404 from AND 402 through selection unit 409, causing counter 404 to count up its counting value in such a manner as $0 \rightarrow 1$. Since the output value of counter 404 matches with the output value of selection unit 411, a synchronization confirmation pulse is delivered. Also, since SYNC detection unit 2 re-holds the SYNC confirmation position counting value on a frame-by-frame basis, SYNC detection unit 2 holds an MF reference counting value "2" at a position coincident with synchronous bit SYNC. In this way, in the transmission data frame synchronization circuit of the present embodiment, the SYNC confirmation position counting value is updated from "1" to "2" as illustrated in (e) of Fig. 4. Data output position determination unit 6 starts delivering data from a start position "a" of input data, which is a position indicated by the SYNC confirmation position counting value "2." Since the transmission data frame synchronization circuit of the present embodiment is configured to disable forward protection stage count processing unit 3 in response to a change due to instable data of one frame such as an instantaneous interruption, format error, and the like, SYNC confirmation position counting value is updated from "1" to "2" while the frame synchronization is continued. The data output position can be varied by changing the SYNC confirmation position counting value, so that normal data can be delivered in the second frame, as illustrated in (k) of Fig. 4.

Next, description will be made on the operation in the third frame.

In the conventional transmission data frame synchronization circuit, after confirming that the position of the synchronous bit in the current frame does not match with the position of the synchronous bit at the time of the confirmation of synchronization, i.e., in the first frame, counter 35 counts up its counting value from one to two ($1 \rightarrow 2$) by enable signal EN, but since the number of forward protection stages has been set to three, the frame synchronization state is maintained. Here, since during a synchronization period, the SYNC confirmation position counting value does not change but remains at "1" so that data output position determination unit 60 does not change a data output position, as illustrated in (d) of Fig. 5. Data output position determination unit 60 starts delivering data from a start position "xx" of input data, which is a position indicated by the SYNC confirmation position counting value "1." In this way, the conventional transmission data frame synchronization circuit delivers erroneous transmission data from a position one clock earlier than the essential position of synchronous bit SYNC in the third frame, as illustrated in (h) of Fig. 5. The delivery of erroneous transmission data is continued until a shift is made to frame non-synchronization.

On the other hand, in the transmission data frame synchronization circuit of the present embodiment, since the position of the synchronous bit in the current frame matches the position of the synchronous bit in the preceding frame in the third frame, the output of NAND 308 is applied to counter 305 as load signal LD to clear the counting value of counter 305 to zero, thus maintaining the frame synchronization state. Also, since the position of the synchronous bit in the current frame matches the position of the synchronous bit in the preceding frame in the third frame, control unit 408 in backward protection stage count processing unit 4 recognizes a synchronization state, and forces selection unit 409 to select the output of AND 407. Upon detection of synchronous bit SYNC, enable signal EN is applied to counter 404 from AND 407 through selection unit 409, causing counter 404 to count up its counting value in such a manner as $0 \rightarrow 1$. Since the output value of counter 404 matches the output value of selection unit 411, a synchronization confirmation pulse is delivered. Also, since SYNC detection unit 2 re-holds the SYNC confirmation position counting value on a frame-by-frame basis, SYNC detection unit 2 holds an MF reference counting value "2" at a position coincident with synchronous bit SYNC, as illustrated in (e) of Fig. 5. Data output position determination unit 6 starts delivering data from a start position "a" of input data, which is a position indicated by the SYNC confirmation position counting value "2," as illustrated in (k) of Fig. 5.

Next, description will be made on the operation in the fourth frame.

In the conventional data frame synchronization circuit, after confirming that the position of the synchronous bit in the current frame does not match with the position of the synchronous bit at the time of the confirmation of synchronization, i.e., in the first frame, counter 35 counts up its counting value from two to three ($2 \rightarrow 3$) by enable signal EN. Since the number of forward protection stages has been set to three, the output value of counter 35 matches with the output value of adder 36, and a non-synchronization confirmation pulse is delivered. With the confirmation of the non-synchronization, the counting value of counter 35 is cleared to zero. As the non-synchronization confirmation pulse is delivered, synchronization state signal generation unit 50 enters a reset state, and brings frame synchronization state signal CHSYNCP to "L" level and frame synchronization state signal CHSYNCN to "H" level. Since frame synchronization state signal CHSYNCN transitions to "H," i.e., frame synchronization state signal CHSYNCP transitions to "L" as illustrated in (g) of Fig. 5, data output position determination unit 60 stops delivering transmission data, as illustrated in (h) of Fig. 5. As the number of backward protection stages is equal to one, data delivery is stopped for one frame from now on.

As described above, in the conventional transmission data frame synchronous circuit, even if the position of the synchronous bit in the current frame matches with the position of the synchronous bit in the preceding frame after a shift has been made during a frame synchronization state to a pseudo-synchronization state in which the position of synchronous bit in the current frame doest not match with the position of synchronous bit in the preceding frame, the frame synchronization is not established, but instead a shift is made to frame non-synchronization, thus stopping the data delivery.

On the other hand, in the transmission data frame synchronization circuit of the present embodiment, since the position of the synchronous bit in the current frame matches with the position of the synchronous bit in the preceding frame in the fourth frame, the output of NAND 308 is applied to counter 305 as load signal LD to clear the counting value of counter 305 to zero, thus maintaining the frame synchronization state. Also, since the position of the synchronous bit in the current frame matches with the position of the synchronous bit in the preceding frame in the fourth frame, control unit 408 in backward protection stage count processing unit 4 recognizes a synchronization state, and forces selection unit 409 to select the output of AND 407. Upon detection of synchronous bit SYNC, enable signal EN is applied to counter 404 from AND 407 through selection unit 409, causing counter 404 to count up its counting value in such a manner as $0 \rightarrow 1$. Since the output value of counter 404 matches with the output value of selection unit 411, a synchronization confirmation pulse is delivered. Also, since SYNC detection unit 2 re-holds the SYNC confirmation position counting value on a frame-by-frame basis, SYNC detection unit 2 holds the MF reference counting value "2" at a position coincident with synchronous bit SYNC, as illustrated in (e) of Fig. 5. Data output position determination unit 6 starts delivering data from a start position "a" of input data, which is a position indicated by the SYNC confirmation position counting value "2," as illustrated in (k) of Fig. 5.

As described above, even if a shift is made to a pseudo-synchronization state in which the position of the synchronous bit in the current frame deviates from the position of the synchronous bit in the preceding frame during a frame synchronization period, the transmission data frame synchronization circuit of the present embodiment establishes the frame synchronization as long as the position of the synchronous bit in the current frame matches with the position of the synchronous bit in the preceding frame, and can therefore avoid stopping the data delivery.

In Fig. 4 and Fig. 5, (m) to (p) represent formats of output data when the transmission data frame synchronization circuit of the present embodiment operates. Output data formats <1 >, <2>, <3>, <4> in the drawings show that the data output positions thereof are the same as output data formats in the first frame, second frame, third frame, and fourth frame, respectively in the output data illustrated in (h). Similarly, output data formats <1'>, <2'>, <3'>. <4'> show that the data output positions are the same as the output data formats in the first frame, second frame, third frame, and fourth frame in the output data illustrated in (k).

Thus, description has been made on the transmission data frame synchronization circuit according to the preferred embodiment of the present invention. In this transmission data frame synchronization circuit, when backward protection stage count setting value R_REG is set to 0 to 2 by CPU protection stage count setting unit 1, i.e., the number of backward protection stages to 1 to 3, the advantage of the transmission data frame synchronization circuit can be put to use. However, if backward protection stage count setting value R_REG is set to three or more in CPU protection stage count setting unit 1, i.e., the number of backward protection stages to four or more, it is necessary to monitor the number of frames equal to or more than the number of forward protection stages, thus failing to exert the advantage of the transmission data frame synchronization circuit of the present embodiment. For making full use of the functions of the transmission data frame synchronization circuit, setting value R_REG of the number of backward protection stages should be set by CPU protection stage count setting unit 1 in the following manner

$$F\_REG \geq R\_REG \qquad \ldots (1)$$

where F_REG is a set value for the number of forward protection stages.

With a setting which satisfies the condition of Equation (1), effects resulting from the use of the transmission data frame synchronization circuit of the present embodiment can be obtained when transmission data is applied in the second pattern which represents that synchronous bit SYNC of transmission data is once erroneously left undetected, but the frame synchronization is not again established.

Since the transmission data frame synchronization circuit of the present invention is a synchronization confirmation circuit which uses the number of protection stages that is an approach used in data transmission among all interfaces, the transmission data frame synchronization circuit can be utilized in any scenario. While the foregoing embodiment relates to a frame synchronization protection stage count circuit which uses synchronous bit SYNC that is positioned as the start of a frame, a frame synchronized signal, for example, may be used instead of synchronous bit SYNC in the present invention. In the following, practical examples are shown.

Similar effects to the foregoing can be provided using the circuit illustrated in Fig. 3 by confirming the synchronization for data including a plurality of user data using a synchronous bit which is held by each user, and controlling delivery of data after synchronization. Here, the synchronous bit may be generated by detecting a plurality of conditions.

Also, similar effects to the foregoing can be expected using the circuit illustrated in Fig. 3 by confirming the synchronization for transmission data which is provided with a synchronization pattern at the head of a frame, and controlling delivery of data after synchronization.

While two further exemplary applications of the present invention have been shown above, these differ only in information used for the frame synchronization and a method of establishing the frame synchronization. The method of the present invention can be applied to any transmission data because information for use in frame synchronization may be extracted by an effective means, and processing may only be made using the circuit illustrated in Fig. 3 based on the extracted information.

As described above, the transmission data frame synchronization circuit according to the present invention is configured to change occurrence conditions of a non-synchronization state, which occur in the conventional transmission data frame synchronization circuit, to prevent the occurrence of the non-synchronization state which is the condition for stopping data delivery. As a result, even if the conventional transmission data frame synchronization circuit ends up with a transition to frame non-synchronization, the transmission data frame synchronization circuit according to the present invention can continue a synchronization state, thus avoid stopping the data delivery to transmit data with continuity. Also, the transmission data frame synchronization circuit according to the present invention can immediately change a data output position in response to a change in position of synchronization information to minimize the occurrence of errors in transmission data by using a detection unit which holds the position of the synchronization information by a frame-by-frame basis, and as a result can prevent the occurrence of transmission data errors in a pseudo-synchronization state during a frame synchronization period, which would cause a problem in the conventional transmission data frame synchronization circuit. Also, in the present invention, transmission data can be more accurately controlled during a synchronization period, and stable processing can be accomplished by using as it is the conventional idea of the number of protection stages which makes a determination by the number of times synchronization information is detected in succession, depending on the state of input transmission data. Even from a viewpoint of circuit scale, the circuit of the present invention can be configured by incorporating a small number of new circuits into the conventional transmission data frame synchronization circuit substantially without modifications, so that the present invention can be readily implemented.

For effectively utilizing the advantages of the present invention as described above, a protection stage count setting may be changed in accordance with the quality of applied transmission data for control, thereby making it possible to support wide applications. Also, according to the present invention, a more accurate data transmission circuit can be realized while making use of the advantages of the previous approach based on the number of protection stages.

**Claims**

1. A transmission data frame synchronization method comprising the steps of:

   holding a position of synchronization information indicative of a breakpoint of a frame on a frame-by-frame basis;
   counting the number of frames in which said synchronization information is detected during a frame non-synchronization period as a first counting value, and establishing frame synchronization when said first counting value reaches a previously set first number of backward protection stages;
   counting the number of frames in which said synchronization information is detected after a pseudo-synchronization state occurs during a frame synchronization period, wherein in the pseudo-synchronization state the position of said detected synchronization information does not match with the position of said synchronization information in the preceding frame, as a second counting value, and establishing frame synchronization when said second counting value reaches a previously set second number of backward protection stages;
   counting the number of frames in which the position of said synchronization information does not match with the position of said synchronization information in the preceding frame during a frame synchronization period as a third counting value, and establishing frame non-synchronization when said third counting value reaches a previously set number of forward protection stages; and
   clearing said third counting value when the position of said synchronization information matches with the position of said synchronization information in the preceding frame after said pseudo-synchronization state has occurred during a frame synchronization period.

2. The method according to claim 1, further comprising the steps of:

   determining a start position of data to be delivered from among applied data based on the held position of said synchronization information when said frame synchronization is established; and
   starting delivering said data from said determined start position.

3. The method according to claim 1, wherein said first number of backward protection stages and said second number of backward protection stages are set independently of each other.

4. The method according to claim 1, wherein said first number of backward protection stage is smaller than said number of forward protection stage.

5. The method according to claim 1, wherein the position of said synchronization information is held as a position of a synchronous bit.

6. A transmission data frame synchronization circuit comprising:

   a detection unit (2) for holding a position of synchronization information indicative of a breakpoint of a frame by a frame-by-frame basis;
   a backward protection stage count processing unit (4) adapted to count the number of frames in which said synchronization information is detected during a frame non-synchronization period as a first counting value, to deliver a synchronization confirmation pulse when said first counting value reaches a previously set first number of backward protection stages, to count the number of frames in which said synchronization information is detected after a pseudo-synchronization state occurs during a frame synchronization period, wherein in the pseudo-synchronisation state the position of said detected synchronization information does not match with the position of said synchronization information in the preceding frame, as a second counting value, and to deliver a frame synchronization confirmation pulse when said second counting value reaches a previously set second number of backward protection stages; and
   a forward protection stage count processing unit (3) adapted to count the number of frames in which the position of said synchronization information does not match with the position of said synchronization information in the preceding frame during a frame synchronization period as a third counting value, and to deliver a frame non-synchronization pulse when said third counting value reaches a previously set number of forward protection stages, and to clear said third counting value when the position of said synchronization information matches with the position of said synchronization information in the preceding frame after said pseudo-synchronization state has occurred during a frame synchronization period.

7. The circuit according to claim 6, further comprising a data output position determination unit (6) for determining a start position of data to be delivered from among applied data based on the held position of said synchronization information when said frame synchronization is established, and for starting delivering said data from said determined start position.

8. The circuit according to claim 6, comprising a protection stage count setting unit (1) for setting said first number of backward protection stages and said second number of backward protection stages independently of each other.

9. The circuit according to claim 8, wherein said protection stage count setting unit set (1) is adapted to set said number of forward protection stages such that said first number of backward protection stages is smaller than said number of forward protection stages.

10. The circuit according to claim 6, wherein the position of said synchronization information is held by said detection unit as a position of a synchronous bit.

11. The circuit according to claim 6, wherein said backward protection stage count processing unit (4) comprises:

a counter (404) capable of counting said first and second counting values;
a counter control unit (410) for forcing said counter to count said first counting value during a frame non-synchronization period and forcing said counter to count said second counting value after said pseudo-synchronization period has occurred during the frame synchronization period;
a selection unit (411) for selecting and delivering said first number of backward protection stages from said first number of backward protection stages and said second number of backward protection stages during a frame non-synchronization period, and selecting and delivering said second number of backward protection stages after said pseudo-synchronization stage has occurred during the frame synchronization period; and
an exclusive logical OR circuit (406) for delivering said synchronization confirmation pulse when a counting value in said counter matches with the number of backward protection stages delivered from said selection unit.

12. The circuit according to claim 6, wherein said forward protection stage count processing unit (3) comprises:

a counter (305) for counting said third counting value;
a counter control unit (311) for forcing said counter to count said third counting value during a frame synchronization period, and clearing said third counting value when the position of said synchronization information matches with the position of said synchronization information in the preceding frame after said pseudo-synchronization state has occurred during the frame synchronization period; and
an exclusive logical OR circuit (307) for delivering said non-synchronization confirmation pulse when a counting value of said counter matches with the number of forward protection stages.

13. The circuit according to claim 6, wherein:

said backward protection stage count processing unit (4) comprises:

a first counter capable of counting said first and second counting values;
a first counter control unit for forcing said first counter to count said first counting value during a frame non-synchronization period and forcing said first counter to count said second counting value after said pseudo-synchronization period has occurred during the frame synchronization period;
a selection unit for selecting and delivering said first number of backward protection stages from said first number of backward protection stages and said second number of backward protection stages during a frame non-synchronization period, and selecting and delivering said second number of backward protection stages after said pseudo-synchronization stage has occurred during the frame synchronization period; and
a first exclusive logical OR circuit for delivering said synchronization confirmation pulse when a counting value in said counter matches with the number of backward protection stages delivered from said selection unit, and
said forward protection stage count processing unit comprises:

a second counter for counting said third counting value;
a second counter control unit for forcing said second counter to count said third counting value during a frame synchronization period, and clearing said third counting value when the position of said synchronization information matches with the position of said synchronization information in the preceding frame after said pseudo-synchronization state has occurred during the frame synchronization period; and

a second exclusive logical OR circuit for delivering said non-synchronization confirmation pulse when a counting value of said second counter matches with the number of forward protection stages.

**Patentansprüche**

1.  Sendedaten-Rahmensynchronisationsverfahren mit den Schritten:

    Halten der Position einer Synchronisationsinformation, die einen Haltepunkt eines Rahmens anzeigt, auf rahmenweiser Basis,
    Zählen der Anzahl von Rahmen, in denen die Synchronisationsinformation erfasst wird, während einer Rahmennichtsynchronisationsperiode als ein erster Zählwert und Erstellen von Rahmensynchronisation, wenn der erste Zählwert eine vorher eingestellte erste Zahl von Rückwärtsschutzstufen erreicht,
    Zählen der Anzahl von Rahmen, in denen die Synchronisationsinformation erfasst wird, nachdem ein Pseudosynchronisationszustand während einer Rahmensynchronisationsperiode auftritt, wobei in dem Pseudosynchronisationszustand die Position der erfassten Synchronisationsinformation nicht mit der Position der Synchronisationsinformation in dem vorhergehenden Rahmen übereinstimmt, als ein zweiter Zählwert, und Erstellen von Rahmensynchronisation, wenn der zweite Zählwert eine vorher eingestellte zweite Zahl von Rückwärtsschutzstufen erreicht,
    Zählen der Anzahl von Rahmen, in denen die Position der Synchronisationsinformation nicht mit der Position der Synchronisationsinformation in dem vorhergehenden Rahmen übereinstimmt, während einer Rahmensynchronisationsperiode als ein dritter Zählwert, und Erstellen von Rahmennichtsynchronisation, wenn der dritte Zählwert eine vorher eingestellte Zahl von Vorwärtsschutzstufen erreicht, und Löschen des dritten Zählwertes, wenn die Position der Synchronisationsinformation mit der Position der Synchronisationsinformation in dem vorhergehenden Rahmen übereinstimmt, nachdem der Pseudosynchronisationszustand während einer Rahmensynchronisationsperiode auftritt.

2.  Verfahren nach Anspruch 1 mit ferner den Schritten:

    Bestimmen einer Statusposition von Daten, die zu liefern sind, aus angelegten Daten, basieren auf der gehaltenen Position der Synchronisationsinformation, wenn die Rahmensynchronisation erstellt ist, und
    Starten des Lieferns der Daten von der bestimmten Startposition.

3.  Verfahren nach Anspruch 1, wobei die erste Zahl von Rückwärtsschutzstufen und die zweite Zahl von Rückwärtsschutzstufen unabhängig voneinander eingestellt werden.

4.  Verfahren nach Anspruch 1, wobei die erste Zahl von Rückwärtsschutzstufen kleiner ist als die Zahl der Vorwärtsschutzstufen.

5.  Verfahren nach Anspruch 1, wobei die Position der Synchronisationsinformation als eine Position eines Synchronisationsbits gehalten wird.

6.  Sendedaten-Rahmensynchronisationsschaltung mit:

    einer Detektoreinheit (2) zum Halten der Position einer Synchronisationsinformation, die einen Haltepunkt eines Rahmens angibt, auf rahmenweiser Basis,
    einer Rückwärtsschutzstufen-Zählverarbeitungseinheit (4), die ausgebildet ist, die Anzahl von Rahmen zu zählen, in denen die Synchronisationsinformation während einer Rahmennichtsynchronisationsperiode erfasst wird, als ein erster Zählwert, einen Synchronisationsbestätigungspuls zu liefern, wenn der erste Zählwert eine vorgegebene erste Zahl von Rückwärtsschutzstufen erreicht, die Zahl von Rahmen zu zählen, in denen die Synchronisationsinformation erfasst wird, nachdem ein Pseudosynchronisationszustand während einer Rahmensynchronisationsperiode auftritt, wobei in dem Pseudosynchronisationszustand die Position der erfassten Synchronisationsinformation nicht mit der Position der Synchronisationsinformation in dem vorhergehenden Rahmen übereinstimmt, als ein zweiter Zählwert, und einen Rahmensynchronisationsbestätigungspuls zu liefern, wenn der zweite Zählwert eine vorgegebene zweite Zahl von Rückwärtsstufen erreicht, und
    eine Vorwärtsschutzstufen-Zählverarbeitungseinheit (3), die ausgebildet ist, die Zahl von Rahmen zu zählen, in denen die Position der Synchronisationsinformation nicht mit der Position der Synchronisationsinformation in dem vorherigen Rahmen übereinstimmt, während einer Rahmensynchronisationsperiode als ein dritter Zählwert, und einen Rahmennichtsynchronisationspuls zu liefern, wenn der dritte Zählwert eine vorher eingestellte Zahl von Vorwärtsschutzstufen erreicht, und den dritten Zählwert zu löschen, wenn die Position der Synchronisationsinformation mit der Position der Synchronisationsinformation in dem vorhergehenden Rahmen übereinstimmt, nachdem der Pseudosynchronisationszustand während einer Rahmensynchronisationsperiode aufgetreten ist.

7. Schaltung nach Anspruch 6, mit ferner einer Datenausgabepositionsbestimmungseinheit (6) zum Bestimmen einer Startposition von zu liefernden Daten aus angelegten Daten, basierend auf der gehaltenen Position der Synchronisationsinformation, wenn Rahmensynchronisation errichtet ist und zum Starten des Lieferns der Daten von der bestimmten Startposition.

8. Schaltung nach Anspruch 6 mit einer Schutzstufenzähleinstelleinheit (1) zum Einstellen der ersten Zahl von Rückwärtsschutzstufen und der zweiten Zahl von Rückwärtsschutzstufen unabhängig voneinander.

9. Schaltung nach Anspruch 8, wobei die Schutzstufenzähleinstelleinheit (1) ausgebildet ist, die Anzahl von Vorwärtsschutzstufen derart einzustellen, dass die erste Zahl von Rückwärtsschutzstufen kleiner ist als die Zahl der Vorwärtsschutzstufen.

10. Schaltung nach Anspruch 6, wobei die Position der Synchronisationsinformation durch die Detektoreinheit als eine Position eines Synchronisationsbits gehalten wird.

11. Schaltung nach Anspruch 6, wobei die Rückwärtsschutzstufen-Zählverarbeitungseinheit (4) aufweist:

einen Zähler (404), der den ersten und den zweiten Zählwert zählen kann,
eine Zählersteuereinheit (410) zum Veranlassen, dass der Zähler den ersten Zählwert während einer Rahmennichtsynchronisationsperiode zählt, und den Zähler veranlasst, den zweiten Zählwert zu zählen, nachdem die Pseudosynchronisationsperiode während der Rahmensynchronisationsperiode auftritt,
eine Auswahleinheit (411) zum Auswählen und Liefern der ersten Zahl von Rückwärtsschutzstufen aus der ersten Zahl von Rückwärtsschutzstufen und der zweiten Zahl von Rückwärtsschutzstufen während einer Rahmensynchronisationsperiode und zum Auswählen und Liefern der zweiten Zahl von Rückwärtsschutzstufen, nachdem der Pseudosynchronisationszustand während der Rahmensynchronisationsperiode auftritt, und
eine logische Exklusiv-ODER-Schaltung (406) zum Liefern des Synchronisationsbestätigungspulses, wenn ein Zählwert in dem Zähler mit der Anzahl von Rückwärtsschutzstufen übereinstimmt, die von der Auswahlschaltung geliefert wurden.

12. Schaltung nach Anspruch 6, wobei die Vorwärtsschutzstufen-Zählverarbeitungseinheit (3) aufweist:

einen Zähler (305) zum Zählen des dritten Zählwertes,
eine Zählersteuereinheit (311) zum Veranlassen, dass der Zähler den dritten Zählwert während einer Rahmensynchronisationsperiode zählt, und zum Löschen des dritten Zählwertes, wenn die Position der Synchronisationsinformation mit der Position der Synchronisationsinformation in dem vorhergehenden Rahmen übereinstimmt, nachdem der Pseudosynchronisationszustand während der Rahmensynchronisationsperiode auftritt, und
eine logische Exklusiv-ODER-Schaltung (307) zum Liefern des Nichtsynchronisationsbestätigungspulses, wenn ein Zählwert des Zählers mit der Anzahl von Vorwärtsschutzstufen übereinstimmt.

13. Schaltung nach Anspruch 6, wobei:

die Rückwärtsschutzstufen-Zählverarbeitungseinheit (4) aufweist:

einen ersten Zähler, der den ersten und den zweiten Zählwert zählen kann,
eine erste Zählersteuereinheit zum Veranlassen, dass der erste Zähler den ersten Zählwert während einer Rahmennichtsynchronisationsperiode zählt, und zum Veranlassen, dass der erste Zähler den zweiten Zählwert zählt, nachdem die Pseudosynchronisationsperiode während der Rahmensynchronisationsperiode auftritt,
eine Auswahleinheit zum Auswählen und Liefern der ersten Zahl von Rückwärtsschutzstufen von der ersten Zahl der Rückwärtsschutzstufen und der zweiten Zahl der Rückwärtsschutzstufen während einer Rahmensynchronisationsperiode, und zum Auswählen und Liefern der zweiten Zahl von Rückwärtsschutzstufen, nachdem der Pseudosynchronisationszustand während der Rahmensynchronisationsperiode auftritt, und eine erste logische Exklusiv-ODER-Schaltung zum Liefern des Synchronisationsbestätigungspulses, wenn ein Zählwert in dem Zähler mit der Zahl von Rückwärtsschutzstufen übereinstimmt, die von der Auswähleinheit geliefert wird, und

wobei die Vorwärtsschutzstufen-Zählverarbeitungseinheit aufweist:

einen zweiten Zähler zum Zählen des dritten Zählwertes,

eine zweite Zählersteuereinheit zum Veranlassen, dass der zweite Zähler den dritten Zählwert während einer Rahmensynchronisationsperiode zählt, und zum Löschen des dritten Zählwertes, wenn die Position der Synchronisationsinformation mit der Position der Synchronisationsinformation in dem vorhergehenden Rahmen übereinstimmt, nachdem der Pseudosynchronisationszustand während der Rahmensynchronisationsperiode auftritt, und

eine zweite logische Exklusiv-ODER-Schaltung zum Liefern des Nichtsynchronisationsbestätigungspulses, wenn der Zählwert des zweiten Zählers mit der Zahl der Vorwärtsschutzstufen übereinstimmt.

**Revendications**

1.  Procédé de synchronisation de trame de données de transmission comprenant les étapes consistant à :

    maintenir une position de données de synchronisation représentative d'un point de rupture d'une trame, sur la base d'une trame à la fois ;

    compter le nombre de trames dans lesquelles lesdites données de synchronisation sont détectées au cours d'une période de non synchronisation de trame en tant qu'une première valeur de comptage, et établir une synchronisation de trame quand ladite première valeur de comptage atteint un premier nombre défini à l'avance de stades de protection vers l'arrière ;

    compter le nombre de trames dans lesquelles lesdites données de synchronisation sont détectées après qu'un état de pseudo synchronisation s'est produit au cours d'une période de synchronisation de trame, dans lequel, dans l'état de pseudo synchronisation, la position desdites données de synchronisation détectées ne coïncide pas avec la position desdites données de synchronisation dans la trame précédente, en tant qu'une deuxième valeur de comptage, et établir une synchronisation de trame quand ladite deuxième valeur de comptage atteint un deuxième nombre défini à l'avance de stades de protection vers l'arrière ;

    compter le nombre de trames dans lesquelles la position desdites données de synchronisation ne coïncide pas avec la position desdites données de synchronisation dans la trame précédente au cours d'une période de synchronisation de trame, en tant qu'une troisième valeur de comptage, et établir une non synchronisation de trame quand ladite troisième valeur de comptage atteint un nombre défini à l'avance de stades de protection vers l'avant ; et

    supprimer ladite troisième valeur de comptage quand la position desdites données de synchronisation coïncide avec la position desdites données de synchronisation dans la trame précédente après que ledit état de pseudo synchronisation s'est produit au cours d'une période de synchronisation de trame.

2.  Procédé selon la revendication 1, comprenant par ailleurs les étapes consistant à :

    déterminer une position de début de données à délivrer parmi une pluralité de données appliquées en se basant sur la position maintenue desdites données de synchronisation quand ladite synchronisation de trame est établie ; et

    commencer à délivrer lesdites données à partir de ladite position de début déterminée.

3.  Procédé selon la revendication 1, dans lequel ledit premier nombre de stades de protection vers l'arrière, et ledit deuxième nombre de stades de protection vers l'arrière sont définis indépendamment l'un de l'autre.

4.  Procédé selon la revendication 1, dans lequel ledit premier nombre de stades de protection vers l'arrière est plus petit que ledit nombre de stades de protection vers l'avant.

5.  Le procédé selon la revendication 1, dans lequel la position desdites données de synchronisation est maintenue comme étant la position d'un bit synchrone.

**6.** Circuit de synchronisation de trame de données de transmission comprenant:

une unité de détection (2) pour maintenir une position de données de synchronisation représentative d'un point de rupture d'une trame, sur la base d'une trame à la fois ;

une unité de traitement de comptage du nombre de stades de protection vers l'arrière (4), qui est adaptée pour compter le nombre de trames dans lesquelles lesdites données de synchronisation sont détectées au cours d'une période de non synchronisation de trame en tant qu'une première valeur de comptage ; pour délivrer une impulsion de confirmation de synchronisation de trame quand ladite première valeur de comptage atteint un premier nombre défini à l'avance de stades de protection vers l'arrière ; pour compter le nombre de trames dans lesquelles lesdites données de synchronisation sont détectées après qu'un état de pseudo synchronisation s'est produit au cours d'une période de synchronisation de trame, dans lequel, dans l'état de pseudo synchronisation, la position desdites données de synchronisation détectées ne coïncide pas avec la position desdites données de synchronisation dans la trame précédente, en tant qu'une deuxième valeur de comptage ; et pour délivrer une impulsion de confirmation de synchronisation de trame quand ladite deuxième valeur de comptage atteint un deuxième nombre défini à l'avance de stades de protection vers l'arrière ; et

une unité de traitement de comptage du nombre de stades de protection vers l'avant (3), qui est adaptée pour compter le nombre de trames dans lesquelles la position desdites données de synchronisation ne coïncide pas avec la position desdites données de synchronisation dans la trame précédente au cours d'une période de synchronisation de trame, en tant qu'une troisième valeur de comptage; et pour délivrer une impulsion de confirmation de non synchronisation de trame quand ladite troisième valeur de comptage atteint un nombre défini à l'avance de stades de protection vers l'avant ; et pour supprimer ladite troisième valeur de comptage quand la position desdites données de synchronisation coïncide avec la position desdites données de synchronisation dans la trame précédente après que ledit état de pseudo synchronisation s'est produit au cours d'une période de synchronisation de trame.

**7.** Circuit selon la revendication 6, comprenant par ailleurs une unité de détermination de position de sortie de données (6), qui est adaptée pour déterminer une position de début de données à délivrer parmi une pluralité de données appliquées en se basant sur la position maintenue desdites données de synchronisation quand ladite synchronisation de trame est établie ; et pour commencer à délivrer lesdites données à partir de ladite position de début déterminée.

**8.** Circuit selon la revendication 6, comprenant une unité de définition de comptage de nombre de stades de protection (1) pour définir ledit premier nombre de stades de protection vers l'arrière et ledit deuxième nombre de stades de protection vers l'arrière indépendamment l'un de l'autre.

**9.** Circuit selon la revendication 8, dans lequel ladite unité de définition de comptage de nombre de stades de protection (1) est adaptée pour définir ledit premier nombre de stades de protection vers l'arrière de telle sorte que ledit premier nombre de stades de protection vers l'arrière soit plus petit que ledit nombre de stades de protection vers l'avant.

**10.** Circuit selon la revendication 6, dans lequel la position desdites données de synchronisation est maintenue par ladite unité de détection comme étant la position d'un bit synchrone.

**11.** Circuit selon la revendication 6, dans lequel ladite unité de traitement de comptage du nombre de stades de protection vers l'arrière (4) comprend :

un compteur (404) qui est apte à compter ladite première et ladite deuxième valeurs de comptage ;

une unité de commande de compteur (410) pour obliger ledit compteur à compter ladite première valeur de comptage au cours d'une période de non synchronisation de trame, et pour obliger ledit compteur à compter ladite deuxième valeur de comptage après que ledit stade de pseudo synchronisation s'est produit au cours de la période de synchronisation de trame ;

une unité de sélection (411) pour sélectionner et pour délivrer ledit premier nombre de stades de protection vers l'arrière à partir dudit premier nombre de stades de protection vers l'arrière et dudit deuxième nombre de stades de protection vers l'arrière au cours d'une période de non synchronisation de trame ; et pour sélectionner et pour délivrer ledit deuxième nombre de stades de protection vers l'arrière après que ledit stade de pseudo synchronisation s'est produit au cours de la période de synchronisation de trame ; et

un circuit logique OU exclusif (406) pour délivrer ladite impulsion de confirmation de synchronisation de trame quand une valeur de comptage dans ledit compteur coïncide avec le nombre de stades de protection vers l'arrière délivré à partir de ladite unité de sélection.

**12.** Circuit selon la revendication 6, dans lequel ladite unité de traitement de comptage du nombre de stades de protection vers l'avant (3) comprend :

un compteur (305) pour compter ladite troisième valeur de comptage ;

une unité de commande de compteur (311) pour obliger ledit compteur à compter ladite troisième valeur de comptage au cours d'une période de synchronisation de trame, et pour supprimer ladite troisième valeur de comptage quand la position desdites données de synchronisation coïncide avec la position desdites données de synchronisation dans la trame précédente après que ledit état de pseudo synchronisation s'est produit au cours de la période de synchronisation de trame ; et

un circuit logique OU exclusif (307) pour délivrer ladite impulsion de confirmation de non synchronisation de trame quand une valeur de comptage dudit compteur coïncide avec le nombre de stades de protection vers l'avant.

**13.** Circuit selon la revendication 6, dans lequel:

ladite unité de traitement de comptage du nombre de stades de protection vers l'arrière (4) comprend :

un premier compteur qui est apte à compter ladite première et ladite deuxième valeurs de comptage ;

une première unité de commande de compteur pour obliger ledit premier compteur à compter ladite première valeur de comptage au cours d'une période de non synchronisation de trame et pour obliger ledit premier compteur à compter ladite deuxième valeur de comptage après que ledit stade de pseudo synchronisation s'est produit au cours de la période de synchronisation de trame ;

une unité de sélection pour sélectionner et pour délivrer ledit premier nombre de stades de protection vers l'arrière à partir dudit premier nombre de stades de protection vers l'arrière et dudit deuxième nombre de stades de protection vers l'arrière au cours d'une période de non synchronisation de trame ; et pour sélectionner et pour délivrer ledit deuxième nombre de stades de protection vers l'arrière après que ledit stade de pseudo synchronisation s'est produit au cours de la période de synchronisation de trame ; et

un premier circuit logique OU exclusif pour délivrer ladite impulsion de confirmation de synchronisation de trame quand une valeur de comptage dans ledit compteur coïncide avec le nombre de stades de protection vers l'arrière délivré à partir de ladite unité de sélection ; et

ladite unité de traitement de comptage du nombre de stades de protection vers l'avant comprend :

un deuxième compteur pour compter ladite troisième valeur de comptage ;

une deuxième unité de commande de compteur pour obliger ledit deuxième compteur à compter ladite troisième valeur de comptage au cours d'une période de synchronisation de trame, et pour supprimer ladite troisième valeur de comptage quand la position desdites données de synchronisation coïncide avec la position desdites données de synchronisation dans la trame précédente après que ledit état de pseudo synchronisation s'est produit au cours de la période de synchronisation de trame ; et

un deuxième circuit logique OU exclusif pour délivrer ladite impulsion de confirmation de non synchronisation de trame quand une valeur de comptage dudit deuxième compteur coïncide avec le nombre de stades de protection vers l'avant.

FIG. 1

FIG. 2

FIG. 3

EP 1 480 370 B1

First frame | Second frame

(a) CLK

(b) SYNC

(c) MF reference counter | 0 1 2 3 | 0 1 2 3 | 0

(d) Counter value latch (Device in Fig. 1)
(SYNC confirmation position counter value) | 1
SYNC1 position (undefined→1) | 1

(e) Counter value latch (Device in Fig. 3)
(SYNC confirmation position counter value) | 1
SYNC1 position (undefined→1) | 1 | 2
SYNC 1 position (1→2)

(f) Input data | xx a b c d | xx a b c d

**Device in Fig. 1**

(g) CHSYNCP | <1> | <2>

(h) Output data | a b c | xx a b
Output position Confirmation | Data error occurs

(i) State — In non-synchronization | Synchronization Confirmation | In synchronization | In synchronization (Forward protection counter 1)

(j) CHSYNCP | <1'> | <2'>

(k) Output data | a b c | a b c
Output position Confirmation | Output position change due to position change in SYNC 1

(l) State — In non-synchronization | Synchronization Confirmation | In synchronization

**Device in Fig. 3**

(m) Output data (Backward four or more stages) | — | <1> | <1> | <2> | <2>

(n) Output data (Backward three stage setting) | — | <1> | <1> | <2> | <2>

(o) Output data (Backward two stage setting) | — | <1> | <1> | <2> | <2>

(p) Output data (Backward single stage setting) | — | <1> | <1> | <2'> | <2'>

# FIG. 4

EP 1 480 370 B1

Third frame | Fourth frame

(a) CLK

(b) SYNC

(c) MF reference counter    0 | 1 | 2 | 3        0 | 1 | 2 | 3

(d) Counter value latch (Device in Fig. 1)
(SYNC confirmation position counter value)    1        1        2

SYNC 1 position (1→2)

(e) Counter value latch (Device in Fig. 3)
(SYNC confirmation position counter value)    2        2

(f) Input data    xx | a | b | c | d        a | b | c | d

**Device in Fig. 1**

(g) CHSYNCP    <3>    <4>

(h) Output data    xx | a | b        "H"→"L"    All "0"
Data error occurrence continues.    Delivering stop

(i) State    In synchronization (Forward protection counter 1) | In synchronization (Forward protection counter 2) | Non-synchronization confirmation (Forward protection counter 3→0)

**Device in Fig. 3**

(j) CHSYNCP    <3'>        <4'>

(k) Output data    a | b | c        a | b | c
Continuing output position    Continuing output position

(l) State    In synchronization    In synchronization

(m) Output data (Backward four or more stages)    <2>    <3>    <3>    <4>

(n) Output data (Backward three stage setting)    <2>    <3>    <3>    <4'>

(o) Output data (Backward two stage setting)    <2>    <3'>    <3'>    <4'>

(p) Output data (Backward single stage setting)    <2'>    <3'>    <3'>    <4'>

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9181715 A